# EUROPÄISCHE PATENTANMELDUNG

(11) **EP 1 484 658 A1**
(43) Veröffentlichungstag der Anmeldung: **08.12.2004**
(21) Anmeldenummer: 04011745.9
(22) Anmeldetag: 18.05.2004
(51) Int. Cl.: G05D 7/06, F16K 3/00, F16K 31/04, F16K 24/00, F24F 13/10, B60H 1/00

(54) **Stellglied zum Einstellen eines Stroms eines fluiden Mediums und Führungsteil für ein fluides Medium mit einem Stellglied**

(30) Priorität: 04.06.2003 DE 10325498
(71) Anmelder: Behr GmbH & Co. KG, 70469 Stuttgart (DE)
(72) Erfinder: Ghussein, Luay, Dipl.-Ing., 70374 Stuttgart (DE); Klingler, Dietrich, Dipl.-Ing., 73540 Heubach (DE); Kreuzer, Walter, 71229 Leonberg (DE); Otto, Jürgen, Dipl.-Ing., 75428 Illingen (DE); Pubrl, Harald, Dipl.-Ing., 70437 Stuttgart (DE); Schmadl, Dieter, Dipl.-Ing., 71672 Marbach (DE); Schwahn, Werner, 71701 Schwieberdingen (DE)
(74) Vertreter: Grauel, Andreas, Dr.

(57) **Zusammenfassung**

Bei üblichen Stellgliedern zum Einstellen eines Stroms eines fluiden Mediums, insbesondere in Heizungs- und Klimaanlagen, verursachen Kraftübertragungs- und Übersetzungselemente zwischen einem Stellantrieb und einem Stellkörper erhöhten Bauraumbedarf, Geräusche im Betrieb und Reibungsverluste. Es ist zur Behebung dieser Nachteile ein Stellglied (7) zum Einstellen eines Stroms eines fluiden Mediums vorgesehen, umfassend einen Stellantrieb (9) zum Antrieb eines Stellkörpers (14), wobei der Stellantrieb (9) ein bewegliches Antriebsteil (13) und ein unbewegliches Antriebsteil (11) aufweist und das bewegliche Antriebsteil (13) und der Stellkörper (14) eine Einheit bilden, wobei eine Bewegung des beweglichen Antriebsteils (13) als eine den Stellkörper (14) repräsentierende Linearbewegung (L) ausführbar ist.

## Beschreibung

Die Erfindung bezieht sich auf ein Stellglied zum Einstellen eines Stroms eines fluiden Mediums, mit einem Stellantrieb zum Antrieb eines Stellkörpers, wobei der Antrieb ein bewegliches Antriebsteil und ein unbewegliches Antriebsteil aufweist. Weiter bezieht sich die Erfindung auf ein Führungsteil für ein fluides Medium mit einem Stellglied.

Zum Steuern und Regeln von Anlagen, die ein fluides Medium in Form von Luft, Gas oder Dampf führen, sind steuer- und regelbare Stellglieder üblicherweise bei einem Führungsteil, z. B. einem Kanal oder einer Kammer einer solchen Anlage, vorgesehen, um den Strom des fluiden Mediums einzustellen. Üblicherweise sieht das Führungsteil eine Öffnung vor, durch die der Strom des fluiden Mediums tritt, und welche über das Stellglied entsprechend der Steuerung oder Regelung teilweise oder vollkommen geöffnet oder geschlossen werden kann. Insbesondere ist ein solches Stellglied als Element zum Steuern und Regeln eines Luft-, Gas- oder Dampfstroms in Heizungs- und Klimaanlagen vorgesehen.

Ein Stellglied verfügt üblicherweise über einen elektrischen Stellantrieb mit einer rotierenden Welle. Die schnelle Rotationsbewegung der Welle wird im allgemeinen über Übersetzungselemente auf eine viel langsamere rotatorische Öffnungs- oder Schließbewegung eines Stellkörpers vor einer Öffnung des Fluid führenden Bauteils transformiert. Bekannt sind bislang Stellkörper in Form von Klappen, die eine rotatorische Schließbewegung ausführen. Die Übersetzungselemente werden üblicherweise in Form eines Getriebes oder einer Kurvenscheibe oder eines Kinematikhebels realisiert, wobei eine angemessene Übersetzung der Bewegungsgeschwindigkeit von der Welle auf den Stellkörper erfolgt. Ein Übersetzungselement erfordert einen hinreichend großen Bauraum, erzeugt Geräusche im Betrieb und vor allem Reibungsverluste. Das Stellglied ist somit aufwendig, verschleißanfällig und weist bedingt durch seinen Aufbau hohe Reibungsverluste auf.

Der Erfindung liegt daher die Aufgabe zugrunde, ein Stellglied anzugeben, das zum einen einfacher aufgebaut ist und zum anderen geringere Reibungsverluste aufweist.

Diese Aufgabe wird durch die Erfindung mit einem Stellglied der eingangs genannten Art gelöst, bei dem erfindungsgemäß das bewegliche Antriebsteil den Stellkörper selbst bildet, wobei eine Bewegung des beweglichen Antriebsteils direkt zu einer Linearbewegung des Stellkörpers führt.

Das heißt, die Bewegung des beweglichen Antriebsteils wird unmittelbar, und insbesondere unter Vermeidung eines weiteren beweglichen Übersetzungselements, dem Stellkörper derart aufgeprägt, dass dieser eine Linearbewegung ausführt. Unter einer Linearbewegung wird dabei eine geradlinige Bewegung verstanden.

Die Erfindung geht dabei von der Überlegung aus, dass die Linearbewegung des Stellkörpers zum einen am besten geeignet ist, um direkt an ein Antriebsteil gekoppelt zu werden. Zum anderen ist eine Linearbewegung des Stellkörpers in einem einzustellenden Strom eines fluiden Mediums besonders reibungsarm und geräuscharm. Unter diesen Voraussetzungen macht es das vorgeschlagene Konzept möglich, vollständig auf Übersetzungselemente zwischen dem beweglichen Antriebsteil und dem Stellkörper zu verzichten. Dadurch werden auch Reibungsverluste zwischen Antriebsteil und Stellkörper vermieden, die einen verringerten Energiebedarf und eine verringerte Geräuschentwicklung beim Betrieb des Stellglieds zur Folge haben. Des Weiteren führt die direkte Kopplung von beweglichen Antriebsteil und Stellkörper zu einem erheblich verringerten Bauraum und zu einer einfachen Mechanik bei dem vorgeschlagenen Stellglied. All dies führt letztendlich zu einer erheblichen Kostenreduzierung bei Herstellung und Betrieb eines derartigen Stellglieds.

Vorteilhafte Weiterbildungen der Erfindung sind den Unteransprüchen zu entnehmen.

Unter einem Stellantrieb wird beispielsweise ein Motor, insbesondere ein Elektromotor verstanden. Ein bewegliches Antriebsteil wird durch bewegliche Teile (= Läufer) des Motors gebildet. Als bewegliches Antriebsteil kann dabei auch eine am Motor mittelbar oder unmittelbar angeschlossene Welle dienen. Der unbewegliche Antriebsteil des Motors ist durch einen Ständer (= Stator) gebildet. Je nach Art und Ausführung des Stellantriebs kann dabei das bewegliche Antriebsteil Primär- oder Sekundärteil sein. Das heißt, das bewegliche Antriebsteil kann mit einer Erregerwicklung versehen sein, wobei das unbewegliche Antriebsteil dann stromführend ausgebildet ist bzw. umgekehrt - das bewegliche Antriebsteil ist stromführend ausgebildet und das unbewegliche Antriebsteil ist mit einer Erregerwicklung versehen. Die Bewegung des beweglichen Antriebsteil wird dabei unmittelbar in eine Bewegung des Stellkörpers überführt. Das vorgeschlagene Konzept vermeidet dabei jegliche Art von beweglichem Übersetzungselement zwischen beweglichem Antriebsteil und Stellkörper, d. h., das bewegliche Antriebsteil und der Stellkörper sind direkt aneinander gekoppelt. Vorzugsweise wird die Bewegung des beweglichen Antriebsteils kupplungsfrei in eine Linearbewegung des Stellkörpers umgesetzt.

Es erweist sich als zweckmäßig, dass die Linearbewegung vom Stellkörper als Ganzes ausgeführt wird. Insbesondere ist der Stellkörper als planares Element oder Platte mit einer hinreichend hohen Steifigkeit und somit in möglichst starrer Form ausgeführt. Es eignet sich jedoch auch ein mit einer ausreichenden Steifigkeit versehenes Band oder eine Folie mit ausreichender Steifigkeit. Ein sich aufwickelnder biegsamer Stellkörper hat zusätzliche Verluste, die beim Aufwickeln entstehen, und soll möglichst vermieden werden. Zweckmäßigerweise weist der Stellkörper als Ganzes eine Größe auf, die in etwa der Öffnung, zu deren Verschluss er vorgesehen ist, entspricht.

In einer ersten, besonders bevorzugten Ausführungsform des vorgeschlagenen Konzepts ist der Antrieb in Form eines Linearantriebs gebildet und die Bewegung des Antriebsteils ist eine Linearbewegung. Insbesondere ist der Stellantrieb in Form eines Linearelektromotors ausgebildet. Ein solcher Linearelektromotor weist zweckmäßigerweise einen Strom durchflossenen Stator auf. Der Stator kann, je nach Bedarf, in Form des beweglichen Antriebsteils oder auch in Form des unbeweglichen Antriebsteils ausgeführt sein. Das dem Stator zugeordnete, unbewegliche Antriebsteil des Linearelektromotors ist bevorzugt mit einer magnetischen Polung versehen, die sich zur gegenseitigen Bewegung des beweglichen und unbeweglichen Antriebsteils eignet. Eine solche Polung kann beispielsweise mittels Dauermagneten realisiert sein.

Bei dieser ersten Ausführungsform bildet das bewegliche Antriebsteil mindestens einen Teil des Stellkörpers. Vorzugsweise erfüllt das bewegliche Antriebsteil des Linearmotors selbst die dem Stellkörper zukommende Einstellfunktion für das fluide Medium. Mit anderen Worten: Das bewegliche Antriebsteil und der Stellkörper sind als eine Einheit oder ein Teil - einteilig - ausgebildet. Das heißt, das bewegliche Antriebsteil wird in Form des Stellkörpers vor der zu öffnenden oder zu verschließenden Öffnung linear bewegt.

Alternativ zu einer einteiligen Ausführung des beweglichen Antriebsteils und des Stellkörpers sind diese separat ausgebildet, wobei das bewegliche Antriebsteil mit dem Stellkörper fest verbunden ist. Insbesondere ist eine entsprechende Verbindung starr ausgeführt. Dabei kann das bewegliche Antriebsteil und der Stellkörper lösbar oder unlösbar miteinander verbunden sein. Beispielsweise kann der Stellkörper auf das bewegliche Antriebsteil geklemmt sein. Zweckmäßigerweise kann dabei das bewegliche Antriebsteil den Stellkörper vor der Öffnung in einer Hin- und Herbewegung schleppen. Es erweist sich dabei grundsätzlich als vorteilhaft, dass der Stellkörper hinreichend starr oder steif ausgebildet ist. Sollte der Stellkörper für bestimmte Anwendungen sehr dünn ausgebildet sein, können zugehörige Spannelemente, beispielsweise eine Folie oder ein Band vorgesehen sein, die der Bewegung des Stellkörpers entgegenwirken, um auf diese Weise eine ausreichende Spannung im Stellkörper herzustellen und somit eine der Steifigkeit gleichkommende Eigenschaft des Stellkörpers zu bilden.

In einer besonders bevorzugten Weiterbildung dieser ersten Ausführungsform ist das bewegliche Antriebsteil stromführend ausgebildet. Dabei kann eine Stromzuführung beispielsweise in Form eines Folienleiters erfolgen, wobei die Folie gleichzeitig die Funktion des Stellkörpers erfüllt. Eine solche Folie kann zur Ausbildung einer geeigneten Steifigkeit beispielsweise gerahmt sein und direkt sowie kupplungsfrei mit dem beweglichen Antriebsteil eines Linearelektromotors verbunden sein.

Zweckmäßigerweise wird der Stellkörper und somit der bewegliche Antriebsteil in einer Führung geführt. Eine solche Führung ist bei der hier erläuterten ersten Ausführungsform als eine geradlinige Führung ausgebildet. Vorzugsweise kann sie in Form einer Säulenführung oder einer Kulissenführung ausgebildet sein.

In einer zweiten, alternativen Ausführungsform der Erfindung ist der Antrieb in Form eines Rotormotors ausgebildet und die Bewegung des beweglichen Antriebsteils ist eine Rotationsbewegung. Das bewegliche Antriebsteil setzt sich vorzugsweise ohne Kupplung direkt in Form einer Spindel fort, auf welcher der Stellkörper direkt aufsitzt. Die Spindel weist einen geeigneten Gewindegang auf, so dass sie als drehendes Antriebsteil über den Gewindegang ihre Rotationsbewegung direkt in eine Linearbewegung des aufsitzenden Stellkörpers kupplungsfrei umsetzt. Das heißt, die Linearbewegung des Stellkörpers wird über die Spindel direkt umgesetzt, indem der Stellkörper unmittelbar auf der Spindel angeordnet ist.

Alternativ zur Spindel kann auch ein Gewindeantrieb, insbesondere Kegelgewindeantrieb oder ein Zahnriemen oder eine Zahnstange eingesetzt werden. Auch dabei wird eine Kupplung oder eine andere Art von beweglichem Übersetzungselement jeweils zwischen dem Kegelgewindeantrieb oder dem Zahnriemen oder der Zahnstange und dem Stellkörper sicher vermieden.

Das oben vorgeschlagene Konzept und die Weiterbildungen desselben erweisen sich als besonders nützlich für die Anwendung im Bereich der Klimaanlagen und Heizungsanlagen oder sonstiger Lüftungsanlagen. Insbesondere ist ein Führungsteil, z. B. ein Rohrstück, ein Kanalstück oder eine Wandung einer solchen Anlage für ein fluides Medium mit einer Öffnung versehen und weist ein bei der Öffnung angebrachtes Stellglied der oben genannten Art zum Einstellen eines Stroms des fluiden Mediums durch die Öffnung auf. Das beschriebene Konzept kann jedoch auch auf jegliche andere Art von Anlage übertragen werden, die ein fluides Medium in Form von Gas, Dampf oder Luft führt.

Ausführungsbeispiele der Erfindung werden nachfolgend anhand einer Zeichnung näher beschrieben.

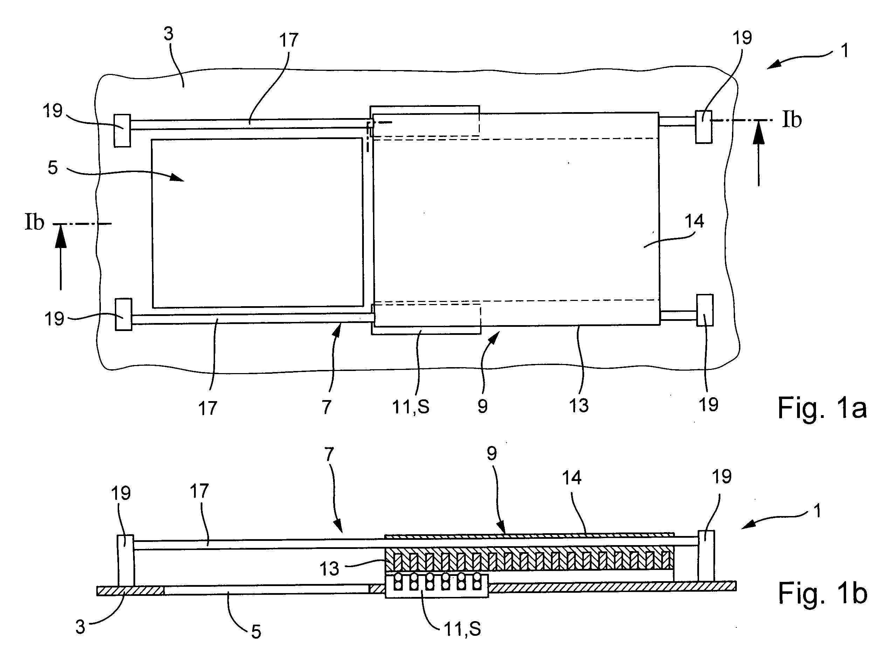

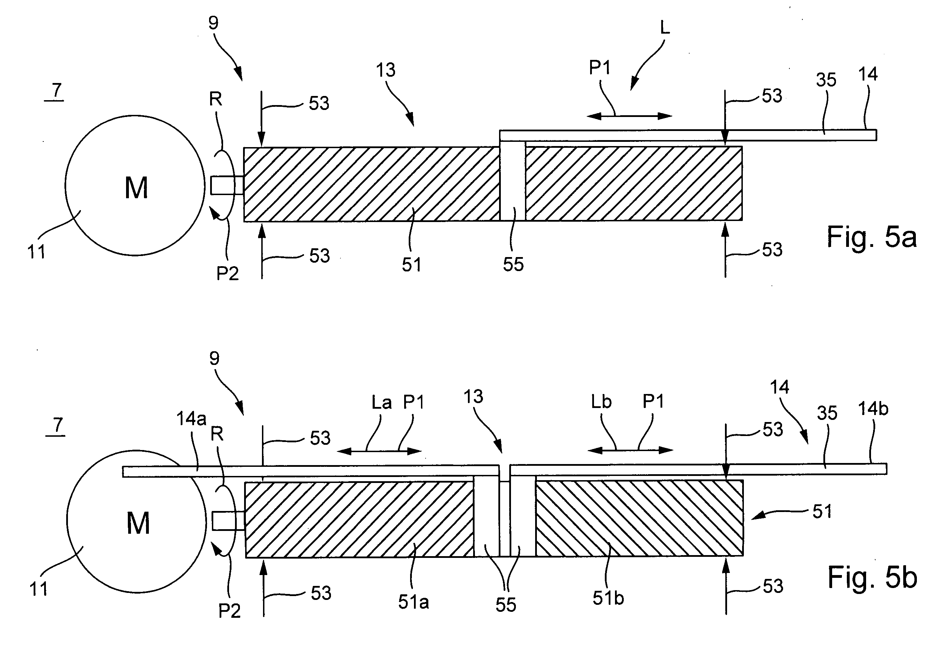

Zum weiteren Verständnis der Erfindung wird in Bezug auf die Figuren 1 bis 4 eine erste bevorzugte Ausführungsform des Stellglieds mit einem Linearantrieb erläutert und in Bezug auf die Fig. 5 der Zeichnung eine zweite bevorzugte Ausführungsform des Stellglieds mit einem Rotationsantrieb erläutert. Darin zeigen:
- Fig. 1 a, 1b: ein Stellglied mit einem als Linearantrieb ausgebildeten Stellantrieb und einem Stellkörper in zwei verschiedenen Ansichten gemäß einer ersten Ausführungsform der Erfindung,
- Fig. 2a: einen als Kurzstatormotor ausgeführten Stellantrieb, wie er in Fig. 1 a, 1 b dargestellt ist,
- Fig. 2b: alternativ einen als Langstatormotor ausgeführten Stellantrieb,
- Fig. 2c: alternativ einen als Doppelkamm-Motor ausgebildeten Stellantrieb,
- Fig. 3a: ein mögliches Funktionsschema eines gegenüber Fig. 2a abgewandelten Kurzstatormotors,
- Fig. 3b: ein mögliches Funktionsschema eines gegenüber Fig. 2b abgewandelten Langstatormotors,
- Fig. 4a: schematisch einen als nicht kommutierenden Gleichstromlinearantriebs mit einem Dauermagnetläufer ausgebildeten Stellantrieb,
- Fig. 4b: schematisch einen als kommutierenden Gleichstromlinearmotor mit Dauermagnetläufer ausgebildeten Stellantrieb,
- Fig. 5a: eine zweite Ausführungsform eines Stellglieds mit einem als Rotationsantrieb ausgebildeten Stellantrieb mit einer eingängiger Spindel für einen Stellkörper, und
- Fig. 5b: schematisch ein Stellglied mit einem als Rotationsantrieb ausgebildeten Stellantrieb mit einer zweigängigen Spindel für einen Stellkörper.

Einander entsprechende Teile sind in allen Figuren mit den gleichen Bezugszeichen versehen.

In der Fig. 1 a ist ein Ausschnitt aus einer Klimaanlage 1 gezeigt. Diese sieht ein Führungsteil 3 in Form einer Gehäusewandung mit einer Öffnung 5 vor, durch welche beispielsweise Luft als fluides Medium geführt wird. Zum Öffnen oder Schließen der Öffnung 5 ist ein Stellglied 7 vorgesehen, das in der Fig. 1 b entlang des in der Fig. 1 a dargestellten Schnittes A-B gezeigt ist. Das Stellglied 7 dient zum Einstellen des durch die Öffnung 5 geführten fluiden Mediums.

Das Stellglied 7 weist einen Stellantrieb 9 auf. Dieser umfasst beispielsweise als ein ortsfestes Primärteil ein unbewegliches Antriebsteil 11. Das unbewegliche Antriebsteil 11 ist in einer möglichen Ausführungsform durch einen Stator S gebildet. Der Stator S ist stromführend ausgebildet, d. h., der Stator S wird von Strom durchflossen.

Des Weiteren umfasst der Stellantrieb 9 ein bewegliches Antriebsteil 13. In einer ersten bevorzugten Ausführungsform bildet das bewegliche Antriebsteil 13 selbst einen die Einstellung des Luftstroms durch Öffnen und/oder Schließen der Öffnung 5 bewirkenden Stellkörper 14. Je nach Art und Aufbau ist der Stellkörper 14 und somit das bewegliche Antriebsteil 13 bevorzugt als eine Platte oder ein planares Element, z. B. in Form einer insbesondere linear bewegbaren Klappenfläche ausgeführt. Auf der Rückseite des plattenartig ausgebildeten und gleichzeitig den Stellkörper 14 bildenden beweglichen Antriebsteils 13 sind Dauermagnete 15 angebracht, um die für den Stator S angepasste Polung zur Verfügung zu stellen.

Weiterhin ist das bewegliche Antriebsteil 13 in einer Führung 17, beispielsweise in einer Säulenführung in Art einer Schiebetür geführt. Die Führung 17 ist über geeignete Befestigungselemente 19, welche je nach Bedarf z. B. als Schraubenverbindung oder Niet- oder Schweißverbindung ausgeführt sind, am Führungsteil 3 befestigt.

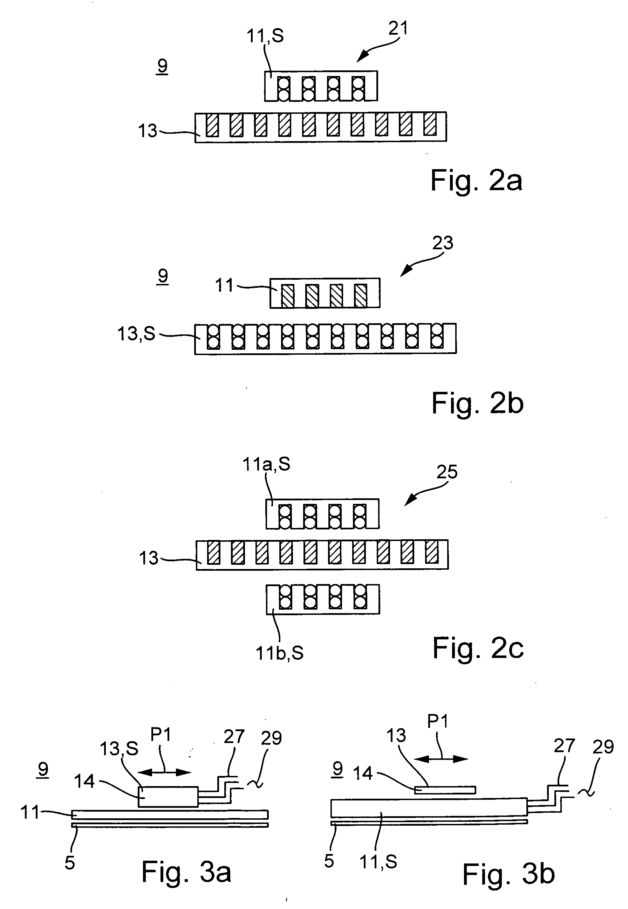

Der in Fig. 1 a, 1b gezeigte Stellantrieb 9 kann wie in den nachfolgenden Figuren 2a bis 2c gezeigt verschiedenartig ausgebildet sein.

Fig. 2a zeigt als eine mögliche Ausführungsform schematisch einen als Kurzstatormotor 21 ausgebildeten Stellantrieb 9 mit einem unbeweglichen Antriebsteil 11 in Form eines Strom durchflossenen Stators S und mit einem beweglichen Antriebsteil 13, welches länger als der Stator S ist und zum Freigeben oder Verschließen der Öffnung 5 der Klimaanlage 1 dient.

In Fig. 2b ist als alternativer Stellantrieb 9 ein Langstatormotor 23 gezeigt, bei dem in einer gegenüber Fig. 2a umgekehrten Anordnung das bewegliche Antriebsteil 13 in Form eines Stators S ausgebildet ist, und zum Freigeben oder Verschließen der Öffnung 5 der Klimaanlage 1 dient. Das unbewegliche Antriebsteil 11 ist in dieser Ausführungsform kürzer als der Stator S und somit kürzer als der bewegliche Antriebsteil 13.

In Fig. 2c ist als ein weiterer alternativer Stellantrieb 9 ein Motor 25 vorgesehen, bei dem das bewegliche Antriebsteil 13 zwischen zwei unbeweglichen Antriebsteilen 11a, 11 b in Form eines Doppelkamms von Statoren S zum Freigeben oder Verschließen der Öffnung 5 der Klimaanlage 1 angeordnet ist.

In Fig. 3a ist in Analogie zum Stellantrieb 9 gemäß Fig. 2a gezeigt, dass ein bewegliches Antriebsteil 13 in Form eines Stators S über eine Stromzuführung 27 mit Wechselstrom 29 versorgt wird und somit als Primärteil des Stellantriebs 9 dient. Das unbewegliche Antriebsteil 11 dient als Sekundärteil des Stellantriebs 9. Hierbei ist das bewegliche Antriebsteil 13 - der Stator S - linear entlang der Führung 17, insbesondere entlang der mittels eines ersten Pfeils P1 angedeuteten Bewegungsrichtung bewegbar. Durch eine mittels des Stellantriebs 9 anhand dessen beweglichen Antriebsteils 13 ausgeführten, insbesondere einstellbaren linearen Hin- oder Herbewegung entlang des ersten Pfeils P1 wird die Öffnung 5 der Klimaanlage 1 zumindest teilweise oder ganz geöffnet und/oder geschlossen. Dabei bildet das bewegliche Antriebsteil 13 - der Primärteil des Stellantriebs 9 - gleichzeitig den Stellkörper 14. Hierzu sind das bewegliche Antriebsteil 13 und der Stellkörper 14 als eine Einheit ausgeführt.

In Fig. 3b ist in Analogie zur Ausführungsform des Stellantriebs 9 gemäß Fig. 2b das unbewegliche Antriebsteil 11 als Stator S, insbesondere als Langstator ausgebildet und wirkt als Primärteil. Das unbewegliche Antriebsteil 11 ist hierbei mit einer Stromzuführung 27 für Wechselstrom 29 versehen. Das den Stellkörper 14 bildende, bewegliche Antriebsteil 13 ist als Sekundärteil des Stellantriebs 9 an der Führung 17 entlang des ersten Pfeils P1 linear zum Schließen und/oder Öffnen der Öffnung 5 bewegbar angeordnet.

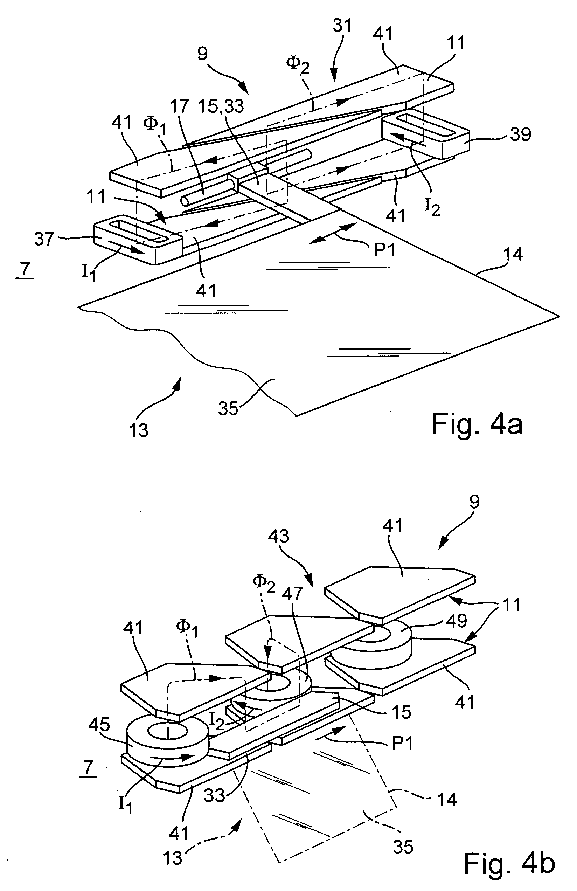

In Fig. 4a ist das Stellglied 7 mit einem als Gleichstromlinearmotor 31 ohne Kommutator ausgebildeten Stellantrieb 9 gezeigt. Der Gleichstromlinearmotor 31 weist als bewegliches und das Primärteil bildende Antriebsteil 13 einen die Dauermagnete 15 bildenden Dauermagnetläufer 33 auf, der ein Band 35 schleppt, das in dieser Ausführungsform den Stellkörper 14 bildet. Der Dauermagnetläufer 33 bewegt sich zwischen einer mit einem Strom I1 durchflossenen und ein Flussfeld φ1 erzeugenden ersten Spule 37 und einer von einem Strom I2 und ein Flussfeld φ2 erzeugenden zweiten Spule 39 entlang der Führung 17. Dabei sind die erste und die zweite Spulen 37 bzw. 39 endseitig der Führung 17 angeordnet. Den unbeweglichen Antriebsteil 11 bildende Polbleche 41 des Gleichstromlinearmotors 31 sind zur Klarheit der Darstellung teilweise abgehoben gezeigt. Der Dauermagnetläufer 33 und das an diesem unmittelbar angeordnete Band 35, welche zusammen den Stellkörper 14 bilden, sind entlang des ersten Pfeils P1 mittels der Führung 17 linear bewegbar angeordnet.

Eine alternative Ausführungsform für ein Stellglied 7 mit einen als Gleichstromlinearmotor 43 mit Kommutator ausgebildeten Stellantrieb 9 ist in Fig. 4b gezeigt. Im Unterschied zu dem nicht kommutierenden Gleichstromlinearmotor 31 der Fig. 4a weist der kommutierende Gleichstromlinearmotor 43 der Fig. 4b mehrere entlang der anhand des ersten Pfeils P1 angedeuteten Bewegungsrichtung angeordnete, weitere Spulen 45, 47 und 49 auf. Der Dauermagnetläufer 33 bewegt sich aufgrund der von den Spulen 45, 47 und 49 erzeugten Flussfelder φ1, φ2 bzw. φ3, wobei die Spulen 45, 47 und 49 von entsprechenden Strömen I1, I2 bzw. 13 durchflossen sind, entlang des ersten Pfeils P1. Durch die entlang des ersten Pfeils P1 ausgeführte Linearbewegung des Stellkörpers 14, welcher mit dem beweglichen Antriebsteil 13 eine Einheit bildet, wird die Öffnung 5 des Führungsteils 3 zumindest teilweise oder vollständig geöffnet und/oder geschlossen.

In Fig. 5a ist als eine zweite alternative Ausführungsform der Erfindung für ein Stellglied 7 mit einem Stellantrieb 9 dargestellt, wobei anstelle der vorhergehend beschriebenen Linearmotoren als Stellantrieb 9 ein Rotationsmotor M gezeigt ist. Beim Rotationsmotor M ist als bewegliches Antriebsteil 13 eine Spindel 51 vorgesehen. Das bewegliche Antriebsteil 13 führt eine durch einen zweiten Pfeil P2 angedeutete Rotationsbewegung R aus. Die durch den zweiten Pfeil P2 angedeutete Rotationsbewegung R wird über die Spindel 51 direkt in eine durch den ersten Pfeil P1 angedeutete Linearbewegung L des als Folie oder Band 35 ausgebildeten Stellkörpers 14 umgesetzt. Dazu ist der Stellkörper 14 direkt an der Spindel 51 angeordnet. Die Spindel 51 ist endseitig über Lagervorrichtungen 53 geeignet gelagert. Das Band 35 ist dabei hinreichend steif ausgeführt und beispielsweise über einen Steg 55 an der Spindel 51 angebracht. Bevorzugt verläuft dabei der Steg 55 über die gesamte Breite des Bandes 35.

Das als Spindel 51 ausgebildete bewegliche Antriebsteil 13 kann bedarfsweise mit einer hier nicht näher dargestellten Kupplung an den Motor M gekoppelt sein. Die Kupplung kann direkt gesteckt oder über ein Stirnrad oder über ein Kegelrad erfolgen. Die Spindel 51 ist im Falle der Fig. 5a eingängig und im Falle der Fig. 5b zweigängig ausgebildet. Das heißt, die Spindel 51 ist unterteilt in zwei separate Spindeln 51 a und 51 b. Entsprechend der Unterteilung der Spindel 51 ist der Stellkörper 14 gemäß Fig. 5b zweiteilig als unterteilter Stellkörper 14a und 14b mit jeweils entlang der Pfeile P1 ausführbaren Linearbewegungen La bzw. Lb ausgebildet. Je nach Art und Ausbildung des Stellantriebs 9 können die Spindeln 51 a und 51 b separat oder gemeinsam angetrieben werden, wodurch der jeweils zugehörige Stellkörper 14a bzw. 14b linear entlang der Pfeile P1 getrennt bzw. gemeinsam bewegbar ist/sind.

Zusammenfassend sind die zwei alternativen Ausführungsformen für Stellglieder 7 zum Einstellen eines Stroms eines fluiden Mediums, insbesondere in Heizungs- und Klimaanlagen, anhand einer Linearbewegung L eines Stellkörpers 14 näher beschrieben. Dabei ist bedingt durch den verschiedenartigen, in Bezug auf den Verzicht von Übersetzungselementen gleichartigen Aufbau des jeweiligen Stellglieds 7 sichergestellt, dass der Bauraum eines derartig ausgebildeten Stellglieds 7 gegenüber herkömmlichen Stellgliedern deutlich geringer ist sowie Geräusche im Betrieb und Reibungsverluste sicher vermieden sind. Hierzu sind das bewegliche Antriebsteil 13 und der Stellkörper 14 eine Einheit bildend ausgeführt, so dass eine Bewegung des beweglichen Antriebsteils 13 direkt eine Linearbewegung L des Stellkörpers 14 bewirkt. Insbesondere bildet in einer ersten Weiterbildung das bewegliche Antriebsteil 13 mindestens einen Teil des Stellkörpers 14 selbst oder ist mit diesem fest verbunden. In einer zweiten Weiterbildung wird die Linearbewegung L des Stellkörpers 14, 14a, 14b über eine Spindel 51 direkt umgesetzt, indem der Stellkörper 14, 14a, 14b direkt auf der Spindel 51 angeordnet ist.

## Patentansprüche

1. Stellglied (7) zum Einstellen eines Stroms eines fluiden Mediums mit einem Stellantrieb (9) zum Antrieb eines Stellkörpers (14), wobei der Stellantrieb (9) ein bewegliches Antriebsteil (13) und ein unbewegliches Antriebsteil (11) aufweist,
**dadurch gekennzeichnet, dass**
das bewegliche Antriebsteil (13) und der Stellkörper (14) eine Einheit bilden, wobei eine Bewegung des beweglichen Antriebsteils (13) als eine den Stellkörper (14) repräsentierende Linearbewegung (L) ausführbar ist.

2. Stellglied nach Anspruch 1,
**dadurch gekennzeichnet, dass**
die Bewegung des beweglichen Antriebsteils (13) kupplungsfrei in die Linearbewegung (L) des Stellkörpers (14) umgesetzt wird.

3. Stellglied nach Anspruch 1 oder 2,
**dadurch gekennzeichnet, dass**
der Stellantrieb (9) in Form eines Linearantriebs gebildet ist und die Bewegung des beweglichen Antriebsteils (13) eine Linearbewegung (L) ist.

4. Stellglied nach einem der Ansprüche 1 bis 3,
**dadurch gekennzeichnet, dass**
der bewegliche Antriebsteil (13) selbst den Stellkörper (14) bildet.

5. Stellglied nach einem der Ansprüche 1 bis 3,
**dadurch gekennzeichnet, dass**
der Stellkörper (14) als ein separates Teil unmittelbar am beweglichen Antriebsteil (13) angeordnet ist.

6. Stellglied nach einem der Ansprüche 1 bis 5,
**dadurch gekennzeichnet, dass**
der bewegliche Antriebsteil (13) stromführend ausgebildet ist.

7. Stellglied nach einem der Ansprüche 1 bis 6,
**dadurch gekennzeichnet, dass**
der Stellkörper (14) und/oder das bewegliche Antriebsteil (13) in einer Führung (17), insbesondere in einer Säulenführung oder Kulissenführung, geführt sind bzw. ist.

8. Stellglied nach einem der Ansprüche 1 bis 7,
**dadurch gekennzeichnet, dass**
Stellkörper (14) als eine Platte, eine Folie oder ein Band ausgebildet ist.

9. Stellglied nach einem der Ansprüche 1 bis 8,
**dadurch gekennzeichnet, dass**
der Stellantrieb (9) in Form eines Rotationsantriebs gebildet ist und die Bewegung des beweglichen Antriebsteils (13) eine Rotationsbewegung (R) ist, die direkt in eine Linearbewegung (L) des Stellkörpers (14) umgesetzt wird.

10. Stellglied nach Anspruch 9,
**dadurch gekennzeichnet, dass**
die Rotationsbewegung (R) in die Linearbewegung (L) über eine Spindel (51) oder einen Gewindeantrieb umgesetzt wird.

11. Stellglied nach Anspruch 9 oder 10,
**dadurch gekennzeichnet, dass**
der Stellkörper (14) direkt auf der Spindel (51) angeordnet ist.

12. Führungsteil (3) für ein fluides Medium mit einer Öffnung (5) und einem an der Öffnung (5) angeordneten Stellglied (7) nach einem der Ansprüche 1 bis 11 zum Einstellen eines Stroms des fluiden Mediums durch die Öffnung (5).
